# EUROPÄISCHE PATENTSCHRIFT

(11) **EP 2 345 775 B1**
(45) Veröffentlichungstag und Bekanntmachung des Hinweises auf die Patenterteilung: **20.06.2018**
(21) Anmeldenummer: 10178642.4
(22) Anmeldetag: 04.07.2002
(51) Int. Cl.: E04F 15/02, F16B 5/00

(54) **Paneel sowie Befestigungssystem für Paneele**
Panel and fastening system for panels
Panneau et système de fixation pour panneaux

(30) Priorität: 10.08.2001 DE 10138285
(43) Veröffentlichungstag der Anmeldung: 20.07.2011
(62) Teilanmeldung aus: 06000431.4
(73) Patentinhaber: Akzenta Paneele + Profile GmbH, 56759 Kaisersesch (DE)
(72) Erfinder: Hannig, Hans-Jürgen, 51427 Bergisch Gladbach (DE)
(74) Vertreter: Lippert Stachow Patentanwälte Rechtsanwälte

(56) Entgegenhaltungen:
- WO-A-00/47841
- WO-A-01/02669
- WO-A-01/51732
- WO-A-84/02155
- WO-A-96/27719
- WO-A-98/40583
- WO-A-99/66151
- WO-A1-01/75247
- US-A- 5 274 979

## Beschreibung

Die Erfindung betrifft ein Paneel, insbesondere Fußbodenpaneel, wobei das Paneel viereckig und tafelförmig ausgebildet ist und wobei an den Schmalseiten des Paneels Halteprofile angeordnet sind, nämlich erste und zweite Halteprofile, wobei gegenüberliegend angeordnete Halteprofile derart zueinander passen, dass mehrere Paneele miteinander verbindbar sind, wobei die gegenüberliegend angeordneten ersten Halteprofile so ausgebildet sind, dass an einem in erster Reihe liegenden Paneel in zweiter Reihe ein neues Paneel verriegelbar ist, indem das neue Paneel zunächst in Schrägstellung relativ zu dem liegenden Paneel an das liegende Paneel angefügt und nachfolgend in die Ebene des liegenden Paneels herabgeschwenkt wird, und wobei die gegenüberliegend angeordneten zweiten Halteprofile korrespondierende Hakenelemente aufweisen, wobei mit einem der Hakenelemente des neuen Paneels und einem Hakenelement eines bereits in zweiter Reihe liegenden Paneels durch das Herabschwenken des neuen Paneels eine Hakenverbindung herstellbar ist.

Ein einfaches Paneel mit einem Befestigungssystem ist aus der DE 199 29 896 A1 und der WO 01/02669 A1 bekannt. Charakteristisch ist für ein solches Befestigungssystem, dass die verwendeten ersten und zweiten Halteprofile stark unterschiedliche Geometrien aufweisen und sich dadurch auch die Fügeweisen der verschiedenartigen Halteprofile sehr unterscheiden. Insbesondere die als Hakenelemente ausgebildeten zweiten Halteprofile, die zu einer Hakenverbindung zusammengefügt werden, bergen ein technisches Problem. Zwar sichert die bekannte Hakenverbindung Fußbodenpaneele gut gegen ebenes Auseinanderschieben rechtwinklig zu den Schmalseiten der verbundenen Paneele. Allerdings bietet sie keine befriedigende Festigkeit gegen ein Lösen der Hakenelemente in einer Richtung senkrecht zu der Verlegeebene der Paneele.

Bevorzugt angewendet wird ein derartiges Befestigungssystem für sogenannten Laminatfußboden, der einen Kern aus Holzwerkstoff, wie MDF, HDF oder Spanplattenmaterial aufweist. Die mechanischen Halteprofile sind zumeist an die Schmalseiten von Holzwerkstoffplatten angefräst.

Laminatfußboden wird überwiegend schwimmend verlegt. Zur Minderung von Trittschall wird üblicherweise eine trittschalldämmende Zwischenlage zwischen dem Verlegeuntergrund und den Laminatpaneelen angeordnet. Auch bekannt ist es, dass eine trittschalldämmende Schicht an der dem Verlegeuntergrund zugewandten Unterseite von Laminatpaneelen fest angebracht ist.

Besonders problematisch ist die Hakenverbindung des bekannten Befestigungssystem dann, wenn im Bereich einer Hakenverbindung nur dasjenige Paneel mit einer großen Last beaufschlagt ist, dessen Hakenelement unten liegt, nämlich dem Verlegeuntergrund zugewandt ist. Das mit diesem verhakte obenliegende Hakenelement des benachbarten Paneels ist nicht belastet daher wird durch die Last nur das Paneel mit dem untenliegenden Hakenelement in die zumeist weiche trittschalldämmende Zwischenlage gedrückt. Dabei löst sich das obenliegende Hakenelement des unbelasteten Paneels aus dem untenliegenden Hakenelement des benachbarten Paneels. Die Hakenverbindung ist außer Funktion und die Funktion meist nicht wieder herstellbar.

Nach dem Stand der Technik sind Hinterschneidungen in die Hakenverbindung integriert, durch die ein Lösen der Hakenverbindung senkrecht zur Verlegeebene der Paneele verhindert werden soll. Diese Hinterschneidungen haben sich jedoch als unzureichend erwiesen, dieser Art von Befestigungselementen eine ausreichende Festigkeit zu verleihen.

Weiteren Stand der Technik bildet die WO 96/27719 A, die ein Panel mit einer Sperre betrifft, wobei eine Nut / Feder Verbindung vorgesehen ist sowie ein Mittel, mit dem ein Lösen der Nut / Feder Verbindung verhindert werden soll.

Die WO 84/02155 A sowie die WO 98/40583 A offenbaren Bauplatten beziehungsweise Paneele mit Nut /Feder Verbindung und einem zusätzlichen Befestigungsclip, der an der Rückseite beziehungsweise Unterseite angeordnet wird und zwei Bauplatten beziehungsweise Paneele zusammenhält.

WO 00/47841 A schlägt ein Paneel mit vier Kanten vor. Je zwei gegenüberliegende Kanten sind komplementär ausgebildet. Eine Ausführungsform umfasst ein zusätzliches Sperrelement mit federelastischen Eigenschaften. Komplementäre Kanten der Paneele werden durch eine Absenkbewegung eines der Paneele miteinander verbunden.

Aus der US 5,274,979 A sind isolierende Platten mit Kanten bekannt, die formschlüssig ineinander passen. Eine Ausführungsform umfasst ein Element (engaging member), das in einer Ausnehmung verbundener Platten Platz findet und die Platten in der Verlegeebene zusammenhält.

WO 99/66151 A betrifft ein Schließsystem für Fußbodenpaneele mit Nut- und Feder-Verbindung, wobei mehrer vertikale Ebenen definiert sind, um die Gestaltung der Feder und der Nut zu definieren.

WO 01/75247 A ist früher angemeldet als die vorliegende Erfindung, jedoch nach deren Anmeldtag veröffentlicht worden und daher ohne Bedeutung für die Frage der erfinderischen Tätigkeit. Die Veröffentlichung beschreibt einen Bodenbelag aus plattenförmigen quadratischen oder rechteckigen Bodenelementen. Jedes Bodenelement weist zwei Arten komplementärer Halteprofile auf, wovon ein Paar mit einer Drehbewegung verbindbar ist und das andere Paar gleichzeitig vertikal montiert wird.

Aus der WO 01/51732 A1 ist ein gattungsgemäßes Befestigungssystem bekannt, das ein zusätzliches Sperrelement aufweist. Das Sperrelement muss nach erfolgter Verriegelung der Hakenelemente nachträglich an der Verbindungsstelle eingefügt werden. Dies erfordert einen zusätzlichen Arbeitsgang. Ferner bereitet die Montage des Sperrelementes dann Probleme, wenn eine Paneelreihe sehr nah vor einer Wand liegt. Für das Sperrelement ist kein ausreichender Platz vorhanden, um es an der Verbindungsstelle einzufügen.

Der Erfindung liegt die Aufgabe zugrunde, ein Paneel für ein Befestigungssystem vorzuschlagen, wobei mit zwei Paneelen eine Hakenverbindung herstellbar ist, die sich auch dann nicht löst, wenn auf dem Paneel mit dem untenliegenden Hakenelement eine Last aufsteht und das obenliegende Hakenelement des benachbarten Paneels ohne Last ist.

Erfindungsgemäß wird die Aufgabe dadurch gelöst, dass ein zusätzliches Sperrelement an einem der Hakenelemente vormontiert ist, und dass das zusätzliche Sperrelement im verhakten Zustand zweier Paneele ein Lösen der Hakenverbindung in einer Richtung senkrecht zu der Ebene der verlegten Paneele unterbindet, wobei das Sperrelement als Krallstück ausgebildet ist und im verhakten Zustand zweier Paneele zwischen sich hintergreifenden Hakenflächen der Hakenelemente angeordnet ist, wobei das Krallstück Krallelemente aufweist, die im verhakten Zustand zweier Paneele in die Oberfläche der Hakenflächen greifen und eine vertikale Auseinanderbewegung der Hakenelemente verhindern. Bei dem Sperrelement kann es sich um ein sehr einfaches Bauteil handeln, für das es vielfältige konstruktive Ausgestaltungen gibt. Es kann sich um ein Sperrelement handeln, das an einem der Hakenelemente vormontiert ist oder um ein loses Sperrelement.

Vorzugsweise ist zwischen den sich hintergreifenden Hakenflächen ein Zwischenraum für das Krallstück vorgesehen, damit zu starke Zwängungen zwischen den Hakenelementen vermieden werden.

Weiterhin ist es nützlich, wenn das Krallstück in einer dafür vorgesehenen Ausnehmung des von der Schmalseite hervorstehenden und der Oberseite des Paneels zugewandten Hakenelements arretiert ist und im montierten Zustand der Hakenverbindung beginnend an der Ausnehmung bis über die Hakenfläche an dem von der Schmalseite hervorstehenden und der Oberseite des Paneels zugewandten Hakenelement angeschmiegt ist.

Einfacherweise kann die Ausnehmung für das Krallstück an dem Teil des von der Schmalseite hervorstehenden und der Oberseite des Paneels zugewandten Hakenelements angeordnet sein, der das korrespondierende Hakenelement hintergreift, wobei die Öffnung der Ausnehmung an einer Fläche des von der Schmalseite hervorstehenden und der Oberseite des Paneels zugewandten Hakenelements angeordnet ist, die zum Verlegeuntergrund gewandt ist, und wobei das Krallstück im montierten Zustand der Hakenverbindung derart umgebogen ist, dass es zwischen die sich hintergreifenden Hakenflächen ragt.

Die Handhabung des Krallstücks vereinfacht sich dadurch, dass es L-förmig ausgebildet ist, und dass ein erster Schenkel des L-förmigen Krallstücks in der Ausnehmung des von der Schmalseite hervorstehenden und der Oberseite des Paneels zugewandten Hakenelements einsetzbar ist und ein zweiter mit den Krallelementen versehener Schenkel in Richtung der Hakenfläche desselben Hakenelements weist. Dabei wird letzterer Schenkel während der Montage automatisch in den Zwischenraum der sich hintergreifenden Hakenflächen hineingebogen.

Ein Paneel mit einem erfindungsgemäßen Befestigungssystem weist zwei unterschiedliche Arten miteinander zusammenwirkender Halteprofile auf. Diejenigen Halteprofile, über die die einzelnen Verlegereihen eines Fußbodens miteinander verriegelt sind, weisen Halteprofile auf, die nach dem Prinzip: Schräges Ansetzen eines neuen Paneels und anschließendes Herabschwenken desselben verriegelt werden. Die hierfür benötigte Art Halteprofil ermöglicht es, ein neues Paneel durch eine scharnierartige Schwenkbewegung an einer verlegten Paneelreihe mechanisch zu verriegeln. Die einzelnen Paneelreihen sind dadurch gegen ebenes Auseinanderziehen in einer Richtung senkrecht zu den verriegelten Halteprofilen gesichert.

An den übrigen beiden Schmalseiten eines Paneels sind Halteprofile in Form von Hakenelementen angebracht, wobei ein erstes Hakenelement von der Schmalseite hervorsteht und im verlegten Zustand dem Verlegeuntergrund zugewandt ist und das zweite Hakenelement von der Schmalseite hervorsteht und der dekorativen Oberseite des Paneels zugewandt ist. Beide Hakenelemente einer Hakenverbindung sind durch ein zusätzliches Sperrelement gegen ein Auseinanderbewegen senkrecht zur Ebene der verlegten Paneele gesichert.

Nachstehend ist die Erfindung in einer Zeichnung beispielhaft dargestellt und anhand der Figuren detailliert beschrieben.

Es zeigen:
- Fig. 1: eine perspektivische Darstellung eines Halteprofils, das durch schräges Ansetzen eines neuen Paneels und anschließendes Herabsenken in die Verlegeebene mechanisch zu verriegeln ist,
- Fig. 2: das schräge Ansetzen der Halteprofile gemäß Figur 1,
- Fig. 3: die Halteprofile gemäß Figur 1 im verriegelten Zustand,
- Fig. 4: Halteprofile in Form von Hakenelementen gemäß dem Stand der Technik,
- Fig. 5-10: Ausführungsformen einer Hakenverbindung mit einem oder mehreren zusätzlichen Sperrelementen mit rechteckigem Querschnitt,
- Fig. 11-14: eine Konstruktion einer Hakenverbindung mit einem oder mehreren zusätzlichen Sperrelementen, die einen runden Querschnitt aufweisen,
- Fig. 15/16: Ausführungsformen einer Hakenverbindung mit Sperrelementen, die im verlegten Zustand der Paneele in solche Flächen der Hakenelemente eingelassen sind, die etwa horizontal liegen,
- Fig. 17-20: eine Ausführungsform einer Hakenverbindung mit einem Sperrelement mit einer federnden Rastlasche, die während der Montage der Hakenverbindung selbsttätig in eine zugeordnete Rastvertiefung eingreift
- Fig. 21: eine Hakenverbindung mit einem als Krallstück ausgebildeten Sperrelement,
- Fig. 22: eine Hakenverbindung mit einem als Klammer ausgebildeten Sperrelement an der Unterseite der Paneele,
- Fig. 23: ein weiteres Sperrelement mit einer federnden Rastlasche sowie eine Sperrnut, die zur Aufnahme des Sperrelements angepasst ist,
- Fig. 24: eine Hakenverbindung mit dem Sperrelement gemäß Fig. 23, während des Fügevorgangs,
- Fig. 25: eine Hakenverbindung mit dem Sperrelement gemäß Fig. 23 im eingerasteten Zustand,
- Fig. 26: eine Hakenverbindung mit denselben Sperrnuten und derselben Sperrausnehmung, wie gemäß Fig. 25, wobei das Rastlaschen-Sperrelement ersetzt ist durch ein Sperrelement mit rundem Querschnitt.

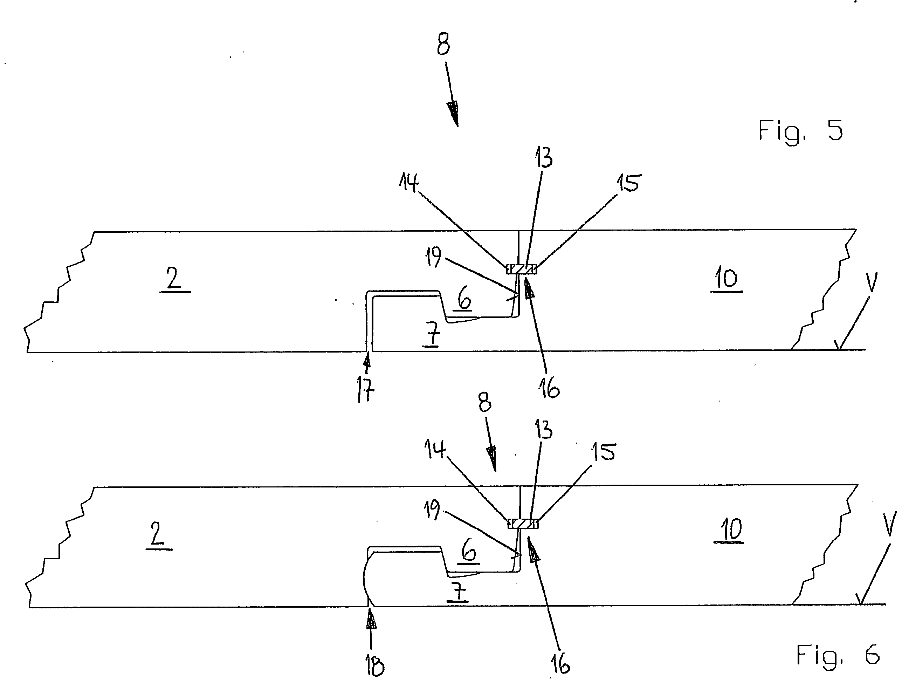

Die Ausführungsformen der Figuren 5 bis 20 und 22 bis 26 sind nicht von Anspruch 1 umfasst. Sie dienen jedoch dem besseren Verständnis der Erfindung.

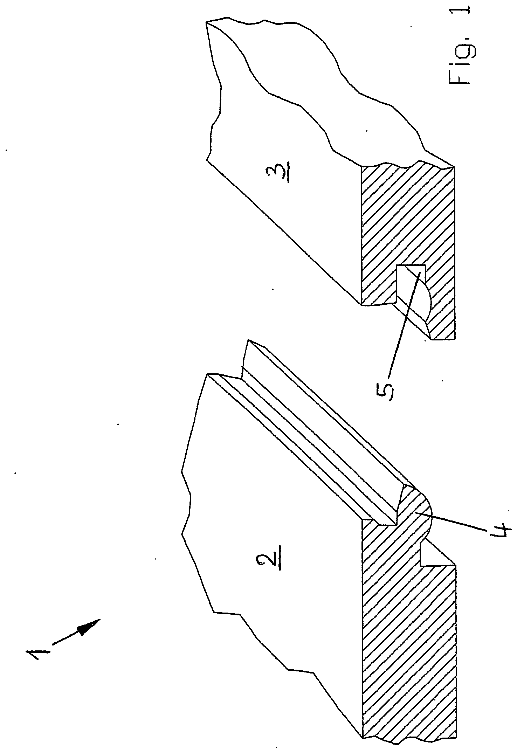

Nach Figur 1 der Zeichnung ist eine Art der Halteprofile des erfindungsgemäßen Befestigungssystems 1 perspektivisch dargestellt. An der jeweils gegenüberliegenden Schmalseite von Paneelen 2 und 3 sind korrespondierende Halteprofile vorgesehen, so dass sich die benachbarten Paneele 2 und 3 miteinander verbinden lassen. Bei dieser Art der Halteprofile handelt es sich um eine modifizierte Nut- und Federverbindung, bei der die Feder 4 eine Hinterschneidung in der unteren Nutwand der Nut 5 hintergreift, so dass beide Paneele 2 und 3 im verlegten Zustand gegen ein Auseinanderziehen in der Ebene der verlegten Paneele 2 und 3 und senkrecht zur Richtung der verriegelten Schmalseiten gesichert sind.

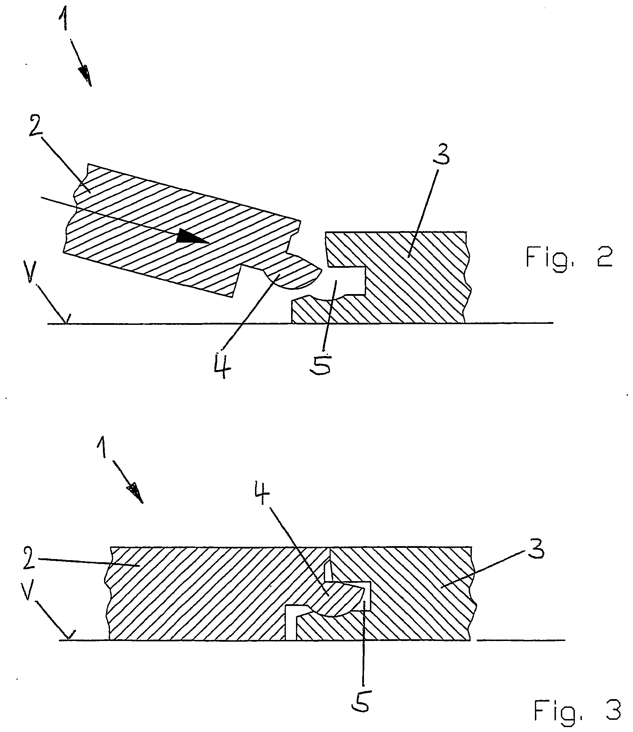

Figur 2 zeigt das schräge Ansetzen eines neuen Paneels 2. Dabei wird stets die Feder 4 des neuen Paneels 2 in Pfeilrichtung P1 mit der Nut 5 des verlegten Paneels 3 in Eingriff gebracht und das neue Paneel 2 anschließend auf den Verlegeuntergrund V herabgeschwenkt, bis die in Figur 3 dargestellte Lage erreicht ist. Es ist leicht verständlich, dass ein gekrümmter Bereich 4a des Querschnitts der Feder 4 eine im Querschnitt gekrümmte Vertiefung 5a in der unteren Nutwand 5b der Nut 5 derart hintergreift, dass ein ebenes Auseinanderschieben der Paneele 2 und 3 senkrecht zu den verriegelten Schmalseiten verhindert ist.

An den übrigen Schmalseiten eines Paneels 2 bzw. 3, das mit dem erfindungsgemäßen Befestigungssystem 1 ausgestattet ist, sind korrespondierende Halteprofile mit Hakenelementen 6 und 7 vorgesehen. Diese haben den Vorteil, dass sie sich sozusagen gleichzeitig mit der Verriegelung der gemäß Figuren 1-3 beschriebenen Halteprofile, Feder 4 und Nut 5, nach dem schrägen Ansetzen durch ein Herabschwenken des neuen Paneels 2 auf den Verlegeuntergrund V miteinander verhaken. Eine irgendwie geartete seitliche Fügebewegung ist zur Herstellung der sich ergebenden Hakenverbindung 8 nicht erforderlich.

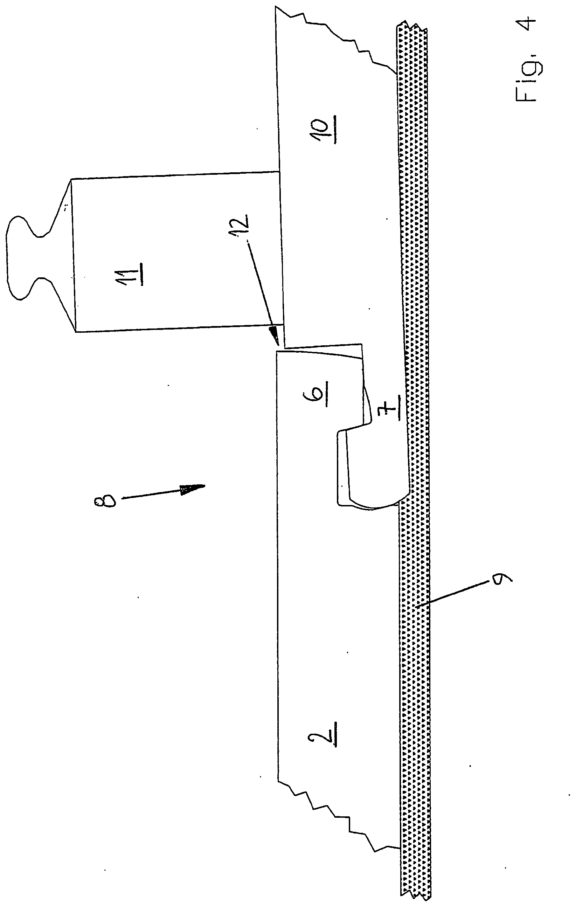

Die gemäß Figur 4 dargestellte Hakenverbindung 8 gerät außer Eingriff. Dies beispielsweise auf unebenen Untergründen, mit Luft zwischen den Paneelen und dem Verlegeuntergrund V sowie dann, wenn eine weiche trittschalldämmende Zwischenlage 9 zwischen den Paneelen und Verlegeuntergrund V angeordnet ist. In Figur 4 verdeutlicht das symbolisch dargestellte Gewicht 11, wie ein Paneel, dessen Hakenelement dem Verlegeuntergrund zugewandt ist, unter der Last eines Gewichts 11 in eine weiche trittschalldämmende Zwischenlage 9 einsinkt. Hierbei kommt es zu einem Höhenversatz 12 an der Oberfläche der Paneele 2 und 10.

Die Figuren 5-10 stellen unterschiedliche Ausführungsformen von Hakenverbindungen 8 dar, die alle mit einem zusätzlichen Sperrelement 13 verriegelt sind. Das Sperrelement 13 verhindert ein Auseinanderbewegen der Hakenverbindung 8 in einer Richtung senkrecht zur Ebene der verlegten Paneele 2 und 10. Auch bei einer Belastung gemäß Figur 4 verhindert das zusätzliche Sperrelement 13 einen Höhenversatz der verhakten Paneele 2 und 10. Das Sperrelement 13 weist in den Ausführungsformen der Figuren 5-10 einen rechteckigen Querschnitt auf. Zur Aufnahme des Sperrelements 13 sind Sperrnuten 14 und 15 vorgesehen, die sich im verhakten Zustand der Hakenelemente 6 und 7 exakt so gegenüberliegen, dass sich eine gemeinsame Sperrausnehmung 16 ergibt, in die das Sperrelement 13 in einer Richtung senkrecht zur der dargestellten Zeichnungsebene eingefügt wird. Die Ausführungsform gemäß Figur 5 zeigt einen freien Zwischenraum 17 zwischen dem freien Ende des Hakenelements 7, das dem Verlegeuntergrund V zugewandt ist, und der Schmalseite des zugeordneten Paneels 2.

In Figur 6 hingegen ist an der gleichen Stelle kein Spiel vorgesehen. Stattdessen ist auch hier eine hinterschnittene Verbindung 18 vorgesehen, die ebenfalls in einer Richtung senkrecht zur der Ebene der verlegten Paneele 2 und 10 verriegelt. An dem Paneel 2, dessen Hakenelement 6 der Oberfläche zugewandt ist, weist das Hakenelement 6 an einer frei hervorstehenden Fläche der Schmalseite die Sperrnut 14 auf, wohingegen die Sperrnut 15 des gegenüberliegenden Hakenelements 7 der Hakenverbindung 8 an einer zurückstehenden Fläche 19 des Hakenelements 7 vorgesehen ist. Das gleiche gilt für die Ausführungsform gemäß Figur 6.

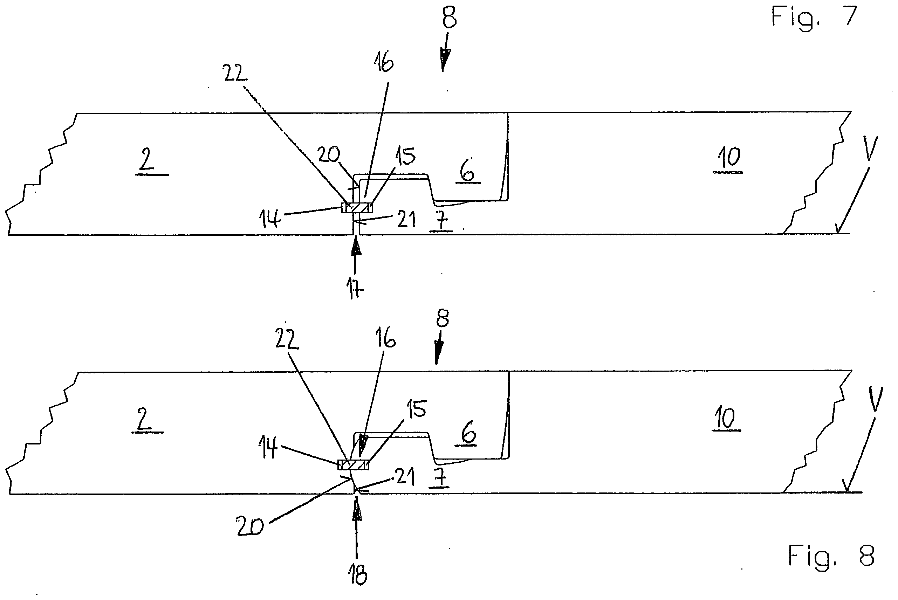

Die Figuren 7 und 8 zeigen Beispiele einer Hakenverbindung 8, bei denen das ein zusätzliches Sperrelement 22 auf der Schmalseite an der frei hervorstehenden Fläche 20 eines Hakenelements 7 vorgesehen ist, das dem Verlegeuntergrund V zugewandt ist. An dem korrespondierenden Hakenelement 6 ist die Sperrnut 15 demgemäß an einer zurückstehenden Fläche 21 des Hakenelements 6 an der Schmalseite des Paneels 2 angeordnet. Figur 7 zeigt ein Beispiel, bei dem die Hakenelemente 6 und 7 im Bereich des Sperrelements 22 einen freien Zwischenraum 17 aufweisen. Gemäß Figur 8 hingegen ist im Bereich des Sperrelements 22 kein freier Zwischenraum 17 zwischen den Hakenelementen 6 und 7 vorgesehen. Stattdessen erhöht eine hinterschnittene Verbindung 18 die Festigkeit der Hakenverbindung 8 gegen ein Auseinanderschieben in einer Richtung senkrecht zu der Ebene der verlegten Paneele 2und 10.

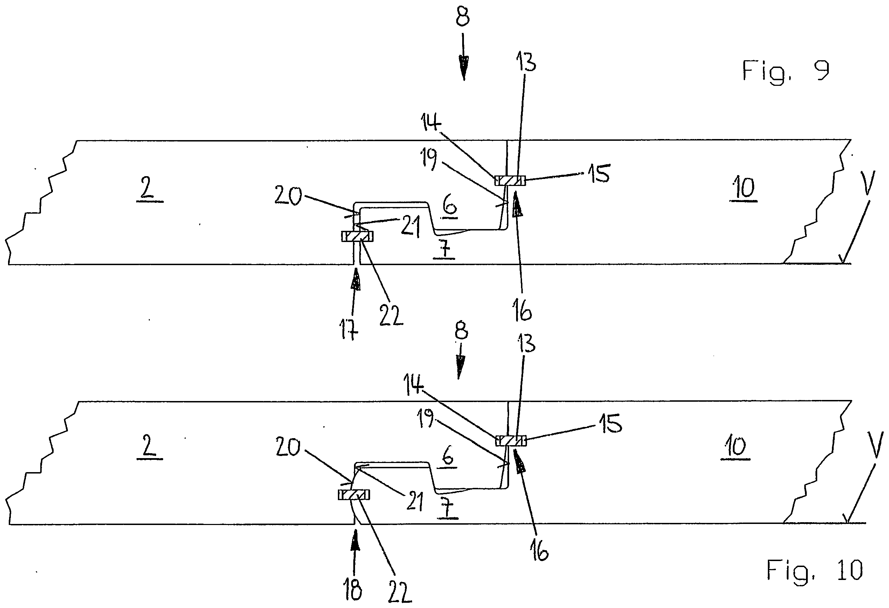

Gemäß Figuren 9 und 10 sind Konstruktionen dargestellt, in denen jede Hakenverbindung 8 mit zwei Sperrelementen 13 und 22 ausgestattet ist. Gemäß Figur 9 sind die Positionen der Sperrelemente 13 und 22 aus Figur 5 und Figur 7 zusammengenommen. In Figur 10 sind die Positionen der Sperrelemente 13 und 22 gemäß Figuren 6 und 8 zusammengenommen. Figur 9 ist ein weiteres Beispiel für eine Hakenverbindung 8, bei der das dem Verlegeuntergrund V zugewandte Hakenelement 7 an seinem freien Ende einen Zwischenraum 17 zu der Schmalseite des Hakenelements 6 des benachbarten Paneels 2 aufweist, wohingegen Figur 10 an der gleichen Stelle eine hinterschnittene Verbindung 18 vorsieht.

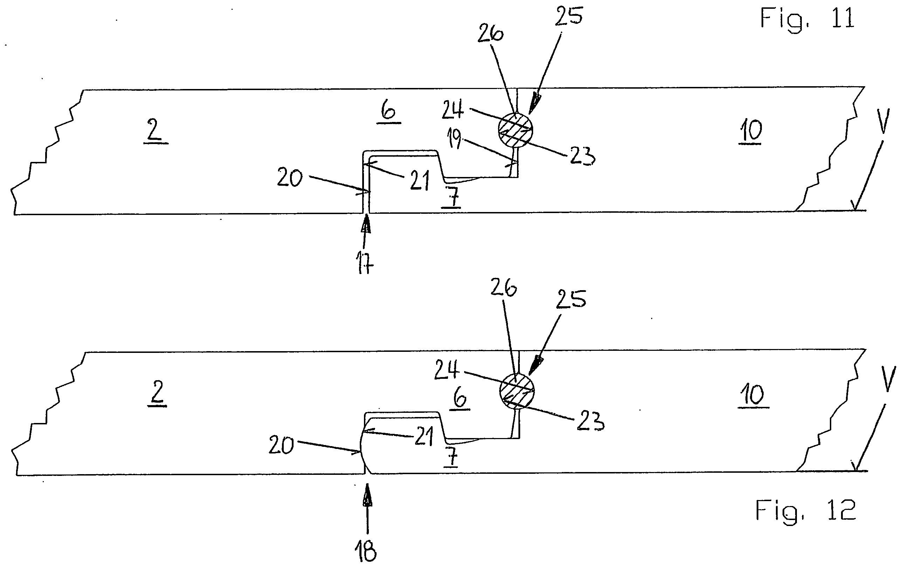

Gemäß Figuren 11-14 sind Sperrelemente mit rundem Querschnitt vorgesehen. Gemäß Figur 11 ist eine Sperrnut mit halbkreisförmigem Querschnitt an dem äußeren freien Ende des Hakenelements 6 angeformt, das der Oberseite des Paneels 2 zugewandt ist. An dem korrespondierenden Hakenelement 7 ist eine Sperrnut 24 demgemäß an einer zurückstehenden Fläche 19 des Hakenelements 7 angebracht, so dass die beiden Sperrnuten 23 und 24 gemeinsam eine Sperrausnehmung 25 mit kreisförmigem Querschnitt ergeben, in der ein Sperrelement 26 angeordnet ist. Das Gleiche gilt für die Ausführungsform gemäß Figur 12. In Figur 11 ist zwischen dem dem Verlegeuntergrund V zugewandten Hakenelement 7 des einen Paneels 10 und einer zurückstehenden Fläche 21 des Hakenelements 6 an der Schmalseite des benachbarten Paneels 2 ein freier Zwischenraum 17 vorgesehen, wohingegen gemäß Figur 12 an der gleichen Stelle eine hinterschnittene Verbindung 18 integriert ist.

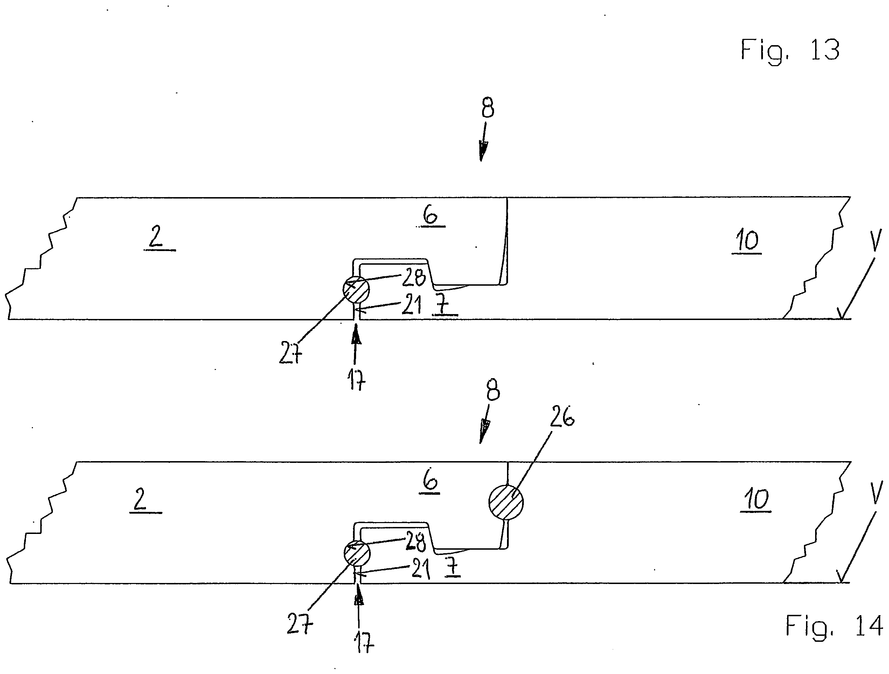

Im Unterschied zu Fig. 12 ist gemäß Figur 13 der Ort für ein kreisrundes Sperrelement 27 an das freie Ende eines Hakenelements 7 eines Paneels 10 verlagert. Eine Sperrnut 28 des korrespondierenden Hakenelements 6 ist dementsprechend an einer an der Schmalseite zurückstehenden Fläche 21 des benachbarten Paneels 2 vorgesehen. Figur 13 ist ein Beispiel dafür, dass das Sperrelement 27 an einem Ort vorgesehen sein kann, bei dem ein freier Zwischenraum 17 zwischen dem äußeren freien Ende des unteren Hakenelements 7 und der gegenüberliegenden Fläche 21 des korrespondierenden Hakenelements 6 vorgesehen ist. Eine Ausführungsform ohne Freiraum 17, mit flach aneinander liegenden ebenen Flächen sowie eine Ausführungsform mit einer hinterschnittenen Verbindung 18 gemäß dem unteren Hakenelement 7 der Figur 12 kann ebenfalls mit einer Sperrausnehmung und einem Sperrelement 27 ausgestattet werden.

Gemäß Figur 14 ist eine besonders feste Hakenverbindung 8 dargestellt, bei der zwei Sperrelemente 26 und 27 mit kreisförmigem Querschnitt zum Einsatz kommen. Die Orte der Sperrelemente 26 und 27 sind zusammengenommen aus den Ausführungsformen gemäß Figur 11 und Figur 13.

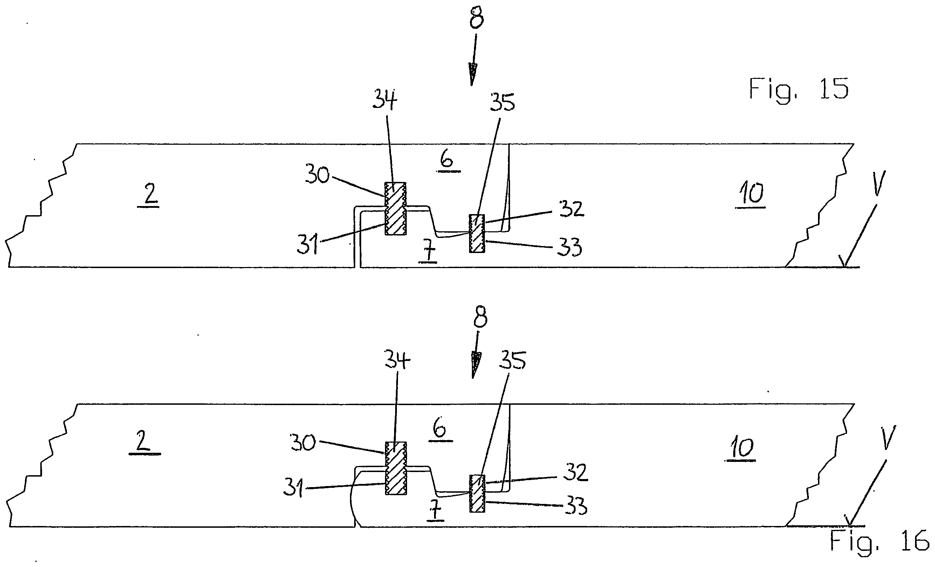

In Figur 15 und 16 ist der verlegte Zustand von Paneelen 2 und 10 mit einer fertigen Hakenverbindung 8 dargestellt. Dabei sind Sperrnuten 30, 31, 32 und 33 in Flächen vorgesehen sind, die etwa parallel zur Ebene der verlegten Paneele liegen. Wiederum sind die Sperrnuten 30 und 32 des einen Hakenelements 6 sowie die Sperrnuten 31 und 33 des korrespondierenden Hakenelements 7 so angeordnet, dass sie sich exakt gegenüberliegen und gemeinsam je eine Sperrausnehmung bilden, in der ein Sperrelement 34 bzw. 35 angeordnet ist. Sowohl gemäß Figur 15 als auch gemäß Figur 16 ist es möglich, auf eines der Sperrelemente 34 bzw. 35 und die entsprechende Sperrausnehmung zu verzichten, um die Geometrie zu vereinfachen. Da die Sperrelemente 34 und 35 ein Auseinanderbewegen der Hakenverbindungen 8 in einer Richtung senkrecht zu der Ebene der Paneele 2 und 10 verhindern müssen, sind die Sperrelemente 34 und 35 so ausgelegt, dass sie sich seitlich in die Nutwände der Sperrnuten30, 31, 32 und 33 festsetzen. In den dargestellten Ausführungsbeispielen sind zu diesem Zweck an der Oberfläche der Sperrelemente hervorstehende Krallelemente 34a und 35a vorgesehen. Diese können auch nach Art von Widerhaken ausgebildet sein, wobei die Widerhaken in der einen Sperrnut 30 und die Widerhaken in der gegenüberliegenden Sperrnut 31 derselben Sperrausnehmung entgegengerichtet angeordnet sind. Das gleiche gilt für die Widerhaken in den Sperrnuten 32 und 33.

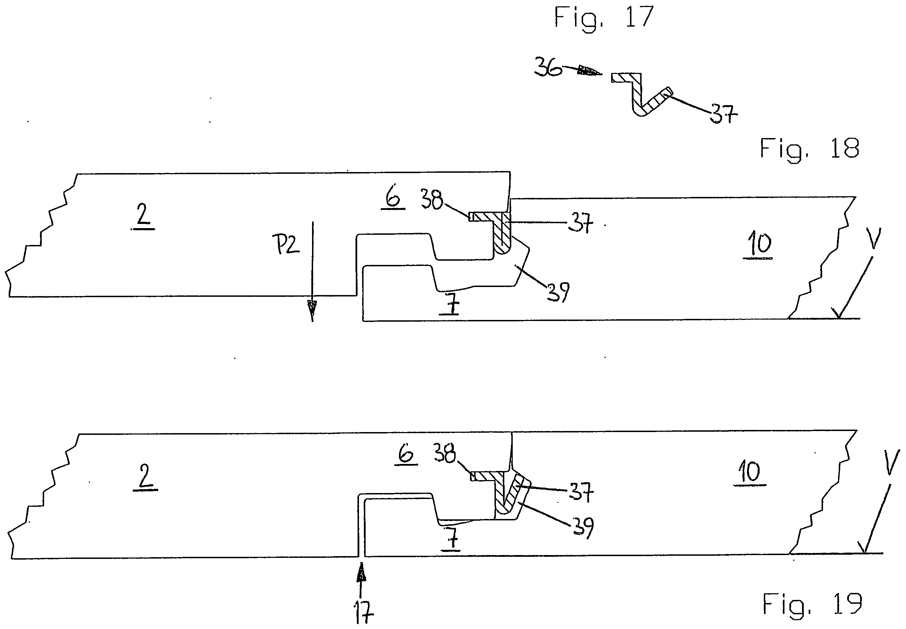

Eine weitere Ausführungsform einer Hakenverbindung 8 ist in den Figuren 17 - 20 dargestellt. Figur 17 zeigt ein loses Sperrelement 36 mit einer federnden Rastlasche 37, die im dargestellten entspannten Zustand weit abgespreizt ist. Figur 18 zeigt das allmähliche Ineinanderfügen der Hakenverbindung 8 gemäß Pfeilrichtung P2. Dabei ist das Sperrelement 36 gemäß Figur 17 in einer Nut 38 in der frei hervorstehenden Fläche 38a des oberen Hakenelements 6 eingesetzt. Die federnde Rastlasche 37 ist durch die Fügebewegung selbst zurückgeklappt. Sobald die Hakenverbindung 8 die in Figur 19 dargestellte Verriegelungslage nahezu erreicht, federt die Rastlasche 37 des Sperrelements 36 selbsttätig in eine Rastvertiefung 39 des korrespondierenden Hakenelements 7. In der gezeigten Stellung ist die Rastlasche 37 weniger weit abgespreizt als in ihrer nach Fig. 17 gezeigten entspannten Lage, so dass sie permanent einen Federdruck gegen die Rastvertiefung 39 ausübt und die Hakenverbindung 8 sicher arretiert.

Das Sperrelement 36 kann durch einen Verlegehandwerker als loses Element in der dafür vorgesehenen Nut 38 des oberen Hakenelements 6 eingesetzt werden oder herstellerseitig an dem Hakenelement 6 vormontiert sein. Das Sperrelement 36 kann sich über die gesamte Länge der Schmalseite eines Paneels erstrecken oder nur über einen Teil der Länge der Schmalseite. In dem Ausführungsbeispiel erstreckt es sich von einem Ende der Schmalseite über deren halbe Länge.

In Figur 19 ist dargestellt, dass zu beiden Seiten der Rastlasche 37 Freiräume vorhanden sind. Diese können beispielsweise dazu dienen, zwecks Demontage der Paneele 2 und 10 das Sperrelement 36 mit Hilfe einer Spitzzange aus der Hakenverbindung 8 herauszuziehen und diese dadurch zu entriegeln.

Die Figuren 18 und 19 zeigen wiederum eine Konstruktion, bei der das dem Verlegeuntergrund V zugewandte Hakenelement 7 an seinem äußeren Ende einen freien Zwischenraum 17 zu dem korrespondierenden Hakenelement 6 aufweist.

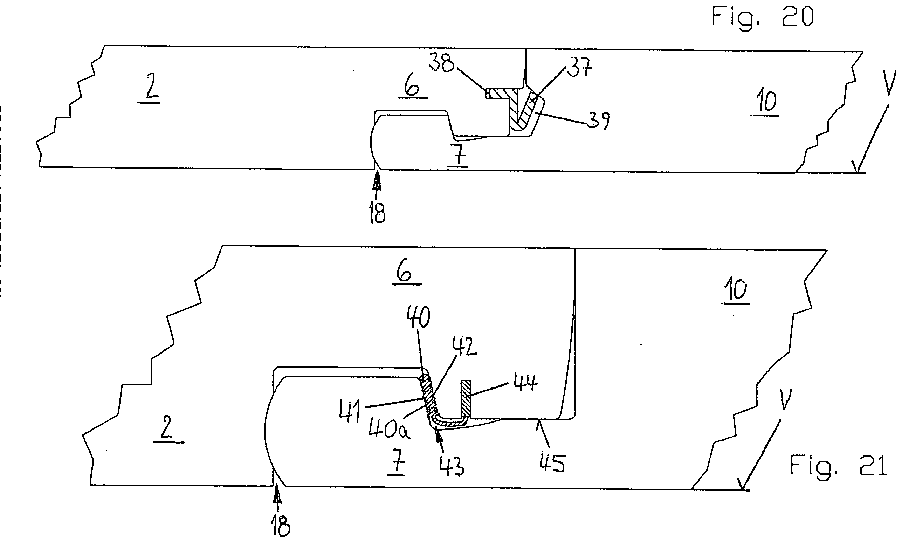

Eine weitere Ausführungsform der Hakenverbindung mit einem Sperrelement, 36 das eine selbsttätige Rastlasche 37 aufweist, ist in Figur 20 dargestellt. Der einzige Unterschied zu der Ausführungsform nach Fig. 18 und Fig. 19 besteht darin, dass das dem Verlegeuntergrund V zugewandte Hakenelement 7 des Paneels 10 an seinem freien äußeren Ende keinen Freiraum 17 zu dem korrespondierenden Hakenelement 6 des verbundenen Paneels 2 aufweist. Stattdessen ist wiederum eine hinterschnittene Verbindung 18 vorgesehen, die ebenso wie das Sperrelement 36 ein Auseinanderbewegen der Hakenverbindung 8 in einer Richtung senkrecht zu der Ebene der verlegten Paneele 2 und 10 verhindert.

Eine andere Konstruktion eines Befestigungssystems 1 sieht gemäß Fig. 21 ein Sperrelement in Form eines Krallstücks 40 vor, das im montierten Zustand zwischen sich hintergreifenden Hakenflächen 41 und 42 der Hakenelemente 6 und 7 angeordnet ist. Das Krallstück 40 weist Krallelemente 40 a auf, die in die Oberfläche der Hakenflächen 41 und 42 greifen und eine vertikale Auseinanderbewegung der Hakenelemente 6 und 7 verhindern. Um Platz für das Krallstück 40 zu schaffen und Zwängungen zwischen den Hakenelementen 6 und 7 zu vermeiden, ist zwischen den sich hintergreifenden Hakenflächen 41 und 42 ein freier Zwischenraum 43 gebildet. In der Darstellung der Fig. 21 ist das Krallstück 40 im montierten Zustand der Hakenverbindung 8 gezeigt. Das Krallstück 40 ist in einer dafür vorgesehenen Ausnehmung 44 des Hakenelements 6 befestigt und schmiegt sich beginnend an der Ausnehmung 44 bis über die Hakenfläche 41 an dem Hakenelement 6 an. Die Ausnehmung 44 für das Krallstück 40 ist an dem Teil des Hakenelements 6 angeordnet, der das korrespondierende Hakenelement 7 hintergreift, wobei die Öffnung der Ausnehmung 44 an einer zum Verlegeuntergrund gewandten Fläche 45 des Hakenelements 6 angeordnet ist. Das Krallstück 40 ist dabei derart umgebogen, dass es in den Zwischenraum 43 hineinragt, den die sich hintergreifenden Hakenflächen 41 und 42 bilden.

Das Krallstück 40 ist vor der Montage L-förmig ausgebildet. Ein erster Schenkel des L-förmigen Krallstücks steckt in der Ausnehmung 44 des Hakenelements 6. Der zweite Schenkel ist mit den Krallelementen versehen und weist vor der Montage etwa senkrecht von der Schmalseite des Paneels 10 weg. Letzterer Schenkel wird während der Montage automatisch in den Zwischenraum 43 der sich hintergreifenden Hakenflächen 41 und 42 hineingebogen.

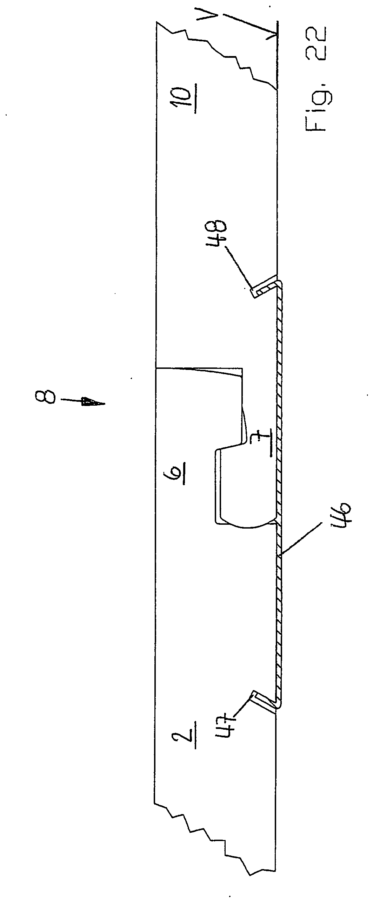

Die in Fig. 22 gezeigte letzte Konstruktion des erfindungsgemäßen Befestigungssystems macht von einem Sperrelement in Form einer Klammer 46 Gebrauch. Zu diesem Zweck weist jedes Paneel 2 und 10 auf seiner dem Verlegeuntergrund V zugewandten Unterseite hinterschnittene Bodenausnehmungen 47 und 48 auf, von denen je eine im Bereich jedes Hakenelements 6 bzw. 7 an der Unterseite des Paneels 2 bzw. 10 angeordnet ist. In je einer Bodenausnehmungen 47 und 48 zweier benachbarter Paneele 2 und 10 greift eine Klammer 46 ein. Damit die Klammer 46 ein Auseinanderbewegen der Hakenverbindung 8 in einer Richtung senkrecht zu der Ebene der verlegten Paneele 2 und 20 verhindert, weist jede Bodenausnehmung 47 und 48 eine Hinterschneidung auf. Nach Fig. 22 ist die Hinterschneidung der Bodenausnehmung 47 eines ersten Paneels 2 im zusammengefügten Zustand zweier Paneele entgegengesetzt ausgerichtet zu der Hinterschneidung der Bodenausnehmung 48 eines zweiten Paneels 10. Die Klammer 46 ist U-förmig ausgebildet. Es ist selbstverständlich, dass die Klammer 46 auch ein ebenes seitliches Auseinanderschieben rechtwinklig zu den Hakenelementen 6 und 7 der Schmalseite der Paneele 2 und 10 verriegelt und somit die Funktion der Hakenverbindung 8 unterstützt.

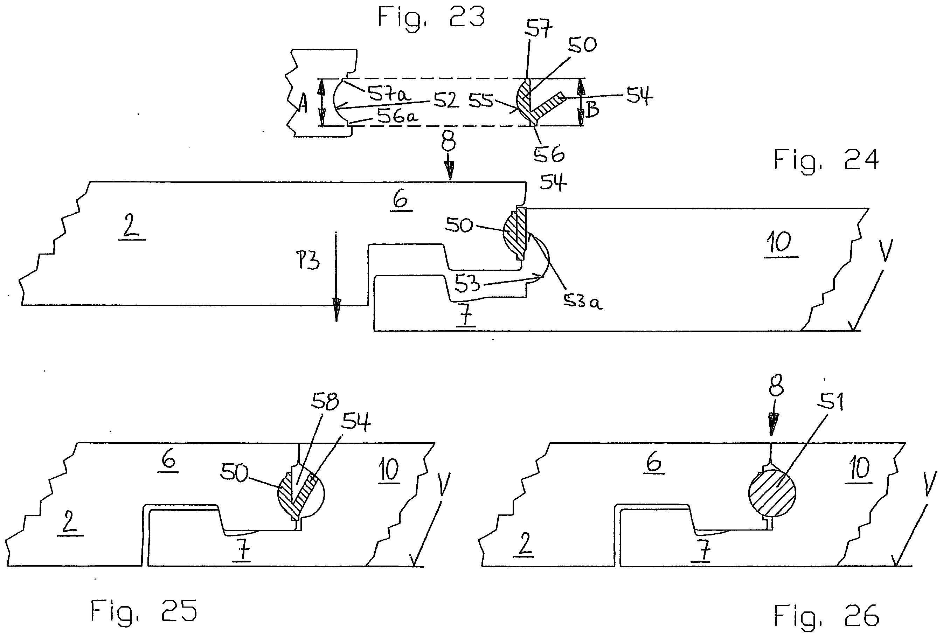

Fig. 23 zeigt ein Sperrelement 50 mit besonderem Querschnitt, das in der Praxis durch das in Fig. 26 gezeigte Sperrelement 51 ersetzt werden kann. Letzteres Sperrelement 51 weist einen einfachen runden Querschnitt auf. Außerdem zeigt Fig. 23 eine leere Sperrnut 52, in der das Sperrelement 51 verliersicher aufnehmbar ist. Die Verliersicherheit gewährleistet während der Handhabung eines Paneels 2 und während der Verhakung der Hakenverbindung 8 gemäß Pfeilrichtung P3, dass das Sperrelement 50 nicht aus der Sperrnut 52 herausfällt. Damit ein Austausch der Sperrelemente 50 und 51 möglich ist, sind die in den Hakenelementen 6 und 7 vorgesehenen Sperrnuten 52 und 53 in besonderer Weise an die Geometrie der unterschiedlichen Sperrelemente 50 und 51 angepaßt.

Das Sperrelement 50 ist eine Weiterbildung des in Fig. 17 dargestellten Sperrelements 36. Es weist eine Rastlasche 54 auf, die in Fig. 23 in einem weit abgespreizten entspannten Zustand dargestellt ist. An einem Rücken 55 weist das Sperrelement 50 eine runde Form auf, die sich gemäß Fig. 24 passend in die Sperrnut 52 des Hakenelements 6 einfügt. Das Sperrelement 50 ist mit Halteelementen 56 und 57 versehen, über die es in der Sperrnut 52 des Hakenelements 6 verliersicher festlegbar ist. Die Halteelemente 56 und 57 dienen außerdem dazu ein Verrutschen bzw. eine Verdrehung des Sperrelements 50 in der Sperrnut 52 bzw. in der durch die Sperrnuten 52 und 53 gebildeten Sperrausnehmung 58 zu verhindern. Die Halteelemente 56 und 57 sind in der vorliegenden Ausführungsform als stumpfe Nocken ausgebildet. An der leeren Sperrnut 52 der Fig. 23 ist zu sehen, dass diese an den Rändern ihres halbkreisförmigen Querschnitts Materialausnehmungen 56a und 57a aufweist, die zur Aufnahme der Halteelemente 56 und 57 dienen. Das an der Sperrnut 52 angegebene Maß A ist etwas geringer ausgeführt als das an dem Sperrelement 50 angegebene Maß B. Dies bewirkt die verliersichere Klemmung des Sperrelements 50 in der Sperrnut 52. In einer anderen Ausführungsform sind die Halteelemente des Sperrelements 50 als Widerhaken oder Krallelemente ausgebildet (nicht dargestellt), die in einem Teil der Nutwand der Sperrnut 52 festsetzbar sind, und das Sperrelement 50 verliersicher an dem Hakenelement 6 festhalten. Die Materialausnehmungen in der Sperrnut 52 sind bei dieser Ausführung nicht erforderlich.

Fig. 24 zeigt den Fügevorgang einer Hakenverbindung 8. Ein Paneel 2 wird nämlich gemäß Pfeilrichtung P3 auf den Verlegeuntergrund V herabgeschwenkt, wodurch die Hakenelemente 6 und 7 der Paneele 2 und 10 sich miteinander verhaken. Es ist leicht erkennbar, dass das Sperrelement 50 sicher in der Sperrnut 52 gehalten ist, während die Hakenelemente auf die beschriebene Weise verbunden werden. Sobald das freie Ende der Rastlasche 54 eine obere Kante 53a der Sperrnut 53 passiert hat, federt die Rastlasche 54 selbsttätig in die Sperrnut 53, welche ihr als Rastvertiefung dient und verriegelt die Hakenverbindung.

### Bezugszeichenliste

- 1: Befestigungssystem
- 2: Paneel
- 3: Paneel
- 4: Feder
- 4a: gekrümmter Bereich
- 5: Nut
- 5a: gekrümmte Vertiefung
- 5b: untere Nutwand
- 6: Hakenelement
- 7: Hakenelement
- 8: Hakenverbindung
- 9: Trittschall dämmende Zwischenlage
- 10: Paneel
- 11: Gewicht
- 12: Höhenversatz
- 13: Sperrelement
- 14: Sperrnut
- 15: Sperrnut
- 16: Sperrausnehmung
- 17: Zwischenraum
- 18: hinterschnittene Verbindung
- 19: zurückstehende Fläche
- 20: hervorstehende Fläche
- 21: zurückstehende Fläche
- 22: Sperrelement
- 23: Sperrnut
- 24: Sperrnut
- 25: Sperrausnehmung
- 26: Sperrelement
- 27: Sperrelement
- 28: Sperrelement
- 30: Sperrnut
- 31: Sperrnut
- 32: Sperrnut
- 33: Sperrnut
- 34: Sperrelement
- 34a: Krallelement
- 35: Sperrelement
- 35a: Krallelement
- 36: Sperrelement
- 37: Rastlasche
- 38: Nut
- 38a: hervorstehende Fläche
- 39: Rastvertiefung
- 40: Krallstück
- 40a: Krallelement
- 41: Hakenfläche
- 42: Hakenfläche
- 43: Zwischenraum
- 44: Ausnehmung
- 45: Fläche
- 46: Klammer
- 47: Bodenausnehmung
- 48: Bodenausnehmung
- 50: Sperrelement
- 51: Sperrelement
- 52: Sperrnut
- 53: Sperrnut
- 54: Rastlasche
- 55: Rücken
- 56: Halteelement
- 57: Halteelement
- 58: Sperrausnehmung
- A: Maß
- B: Maß
- P1: Pfeilrichtung
- P2: Pfeilrichtung
- P3: Pfeilrichtung
- V: Verlegeuntergrund

## Patentansprüche

1. Paneel, insbesondere Fußbodenpaneel, wobei das Paneel viereckig und tafelförmig ausgebildet ist und wobei an den Schmalseiten des Paneels (2, 3, 10) Halteprofile angeordnet sind, nämlich erste und zweite Halteprofile, wobei gegenüberliegend angeordnete Halteprofile derart zueinander passen, dass mehrere Paneele (2, 3, 10) miteinander verbindbar sind, wobei die gegenüberliegend angeordneten ersten Halteprofile so ausgebildet sind, dass an einem in erster Reihe liegenden Paneel (2, 3, 10) in zweiter Reihe ein neues Paneel (2) verriegelbar ist, indem das neue Paneel (2) zunächst in Schrägstellung relativ zu dem liegenden Paneel (3) an das liegende Paneel (3) angefügt und nachfolgend in die Ebene des liegenden Paneels (3) herabgeschwenkt wird, und wobei die gegenüberliegend angeordneten zweiten Halteprofile korrespondierende Hakenelemente (6, 7) aufweisen, wobei mit einem der Hakenelemente (6, 7) des neuen Paneels (2) und einem Hakenelement (6, 7) eines bereits in zweiter Reihe liegenden Paneels (3) durch das Herabschwenken des neuen Paneels (2) eine Hakenverbindung (8) herstellbar ist, **dadurch gekenn** - **zeichnet**, dass ein zusätzliches Sperrelement (40) an einem der Hakenelemente vormontiert ist, und dass das zusätzliche Sperrelement im verhakten Zustand zweier Paneele (2, 3, 10) ein Lösen der Hakenverbindung (8) in einer Richtung senkrecht zu der Ebene der verlegten Paneele (2, 3, 10) unterbindet, wobei das Sperrelement als Krallstück (40) ausgebildet ist und im verhakten Zustand zweier Paneele zwischen sich hintergreifenden Hakenflächen (41, 42) der Hakenelemente (6, 7) angeordnet ist, wobei das Krallstück Krallelemente (40a) aufweist, die im verhakten Zustand zweier Paneele in die Oberfläche der Hakenflächen greifen und eine vertikale Auseinanderbewegung der Hakenelemente verhindern.

2. Paneel nach Anspruch 1, **dadurch gekenn** - **zeichnet**, dass zwischen den sich hintergreifenden Hakenflächen (41, 42) ein Zwischenraum (43) für das Krallstück (40) vorgesehen ist.

3. Paneel nach Anspruch 2, **dadurch gekenn**- **zeichnet**, dass das Krallstück (40) in einer dafür vorgesehenen Ausnehmung (44) des von der Schmalseite hervorstehenden und der Oberseite des Paneels zugewandten Hakenelements (6) angebracht ist und im montierten Zustand der Hakenverbindung (8) beginnend an der Ausnehmung (44) bis über die Hakenfläche (41) an dem von der Schmalseite hervorstehenden und der Oberseite des Paneels zugewandten Hakenelement (6) angeschmiegt ist.

4. Paneel nach Anspruch 2 oder 3, **dadurch ge**- **kennzeichnet**, dass die Ausnehmung (44) für das Krallstück (40) an dem Teil des von der Schmalseite hervorstehenden und der Oberseite des Paneels zugewandten Hakenelements (6) angeordnet ist, der das korrespondierende Hakenelement (7) hintergreift, wobei die Öffnung der Ausnehmung (44) an einer Fläche (45) des von der Schmalseite hervorstehenden und der Oberseite des Paneels zugewandten Hakenelements (6) angeordnet ist, die zum Verlegeuntergrund (V) gewandt ist, wobei das Krallstück (40) im montierten Zustand der Hakenverbindung (8) derart umgebogen ist, dass es in den Zwischenraum (43) der sich hintergreifenden Hakenflächen (41, 42) ragt.

5. Paneel nach Anspruch 4, **dadurch gekennzeichnet, dass** das Krallstück (40) L-förmig ausgebildet ist, und dass ein erster Schenkel des L-förmigen Krallstücks (40) in der Ausnehmung (44) des von der Schmalseite hervorstehenden und der Oberseite des Paneels zugewandten Hakenelements (6) einsetzbar ist und ein zweiter Schenkel in Richtung der Hakenfläche desselben Hakenelements weist, wobei der zweite Schenkel während der Montage automatisch in den Zwischenraum (43) der sich hintergreifenden Hakenflächen hineingezogen wird.

## Claims

1. Panel, especially floor panel, whereat the panel is designed rectangular and tabular and whereat retaining profiles are disposed on the small faces of said panels (2, 3, 10), namely first and second retaining profiles, whereat oppositely arranged retaining profiles match said retaining profiles in such a manner that several panels (2, 3, 10) can be interlinked, whereat the oppositely arranged first retaining profiles are configured in such a manner that, on a panel (2, 3, 10) lying in the first row, a new panel (2) can be interlocked in second row by attaching the new panel (2) to the lying panel (3) at a temporary angle relative to the lying panel (3) and then swivelling down into the plane of the lying panel (3), and whereat the oppositely arranged second retaining elements comprise corresponding hook elements (6, 7), whereat a hook connection (8) can be established by means of one of the hook elements (6, 7) of the new panel (2) and a hook element (6, 7) of the panel (3) that is already lying in second row by swivelling down the new panel (2), **characterised in that** an additional locking element (40) is pre-mounted at one of the hook elements, and that the additional locking element in the hooked state of two panels (2, 3, 10) prevents the hook connection (8) from being released in a direction perpendicular to the plane of the installed panels (2, 3, 10), whereat the locking element is designed as a claw component (40) and, in installed state, is located between interlocking hook surfaces (41, 42) of the hook elements (6, 7), whereat the claw component displays claw elements (40a), which in the hooked state of two panel grip into the top surface of hook surfaces and prevents vertical separation of hook elements.

2. Panel according to Claim 1, **characterised in that** a space (43) for the claw component (40) is provided between the interlocking hook surfaces (41, 42).

3. Panel according to claim 2, **characterised in that** the claw piece (40) is mounted in a recess (44) provided for this purpose in the hook element (6) which hook element protrudes from the small face and faces the upper side of the panel, and in the mounted state of the hook connection (8) the claw piece beginning at the recess (44) and extending over the hook surface (41) is nestled to the hook element (6) which hook element protrudes from the small face and faces the upper side of the panel.

4. Panel according to Claim 2 or 3, **characterised in that** the recess (44) for the claw component (40) is located on the part of the hook element (6) that engages the corresponding hook element (7), where the opening of the recess (44) is located on a surface (45) of the hook element (6) that faces the base surface (V) and where, in the assembled state of the hook connection (8), the claw component (40) is bent in such a way that it projects into the space (43) between the engaging hook surfaces (41, 42).

5. Panel according to Claim 4, **characterised in that** the claw component (40) is of L-shaped design and **in that** a first leg of the L-shaped claw component (40) can be inserted in the recess (44) of the hook element (6) and a second leg points in the direction of the hook surface of the same hook element, where the second leg is automatically drawn into the space (43) between the engaging hook surfaces during installation.

## Revendications

1. Panneau, en particulier panneau de sol, le panneau étant rectangulaire et configuré en forme de plaque et des profilés de maintien étant disposés sur les tranches du panneau (2, 3, 10), à savoir des premiers et des deuxièmes profilés de maintien, les profilés de maintien disposés de manière opposée correspondant l'un à l'autre de sorte que plusieurs panneaux (2, 3, 10) peuvent être reliés les uns aux autres, les premiers profilés de maintien disposés de manière opposée étant configurés de sorte à ce qu'il soit possible de verrouiller dans la deuxième rangée un nouveau panneau (2) sur un panneau couché dans la première rangée (2, 3, 10) en approchant d'abord du panneau couché (3) le nouveau panneau (2) en position inclinée par rapport au panneau couché (3), puis en le rabattant dans le plan du panneau couché (3), les deuxièmes profilés de maintien disposés de manière opposée présentant les éléments formant crochet correspondants (6, 7) et un assemblage par crochet (8) pouvant être réalisé avec un des éléments formant crochet (6, 7) du nouveau panneau (2) et un élément formant crochet (6, 7) d'un panneau (3) déjà couché dans la deuxième rangée en rabattant le nouveau panneau (2), **caractérisé en ce qu**'un élément de blocage supplémentaire (40) est prémonté sur l'un des éléments formant crochet et que l'élément de blocage supplémentaire empêche, quand deux panneaux (2, 3, 10) sont accrochés, une libération de l'assemblage par crochet (8) dans un sens perpendiculaire au plan des panneaux posés (2, 3, 10), l'élément de blocage étant configuré comme griffe (40) et, lorsque deux panneaux (2, 3, 10) sont accrochés, étant disposé entre des surfaces de crochet (41, 42), engagées l'une derrière l'autre, des éléments formant crochet (6, 7), la griffe présentant des éléments de griffe (40a) qui, lorsque deux panneaux sont accrochés, mordent dans la surface des surfaces de crochet et empêchent les éléments formant crochet de s'écarter les uns des autres dans le plan vertical.

2. Panneau selon la revendication 1, **caractérisé en ce qu'**un espace (43) est prévu pour la griffe (40) entre les surfaces de crochet (41, 42) engagées l'une derrière l'autre.

3. Panneau selon la revendication 2, **caractérisé en ce que** la griffe (40) est disposée dans un évidement (44) prévu à cet effet sur l'élément formant crochet (6) dépassant de la tranche et orienté vers la face supérieure du panneau et que lorsque l'assemblage par crochet (8) est monté, elle épouse la forme de l'élément formant crochet (6) dépassant de la tranche et orienté vers la face supérieure du panneau, en commençant au niveau de l'évidement (44) et en allant jusqu'au-delà de la surface de crochet (41).

4. Panneau selon la revendication 2 ou 3, **caractérisé en ce que** l'évidement (44) pour la griffe (40) est disposé sur la partie de l'élément formant crochet (6) dépassant de la tranche et orienté vers la face supérieure du panneau (44) et que ladite partie s'engage derrière l'élément formant crochet (7) correspondant, l'ouverture de l'évidement (44) étant disposée sur une surface (45) de l'élément formant crochet (6) dépassant de la tranche et orienté vers la face supérieure du panneau, ladite surface étant orientée vers le substrat de pose (V), la griffe (40) étant, lorsque l'assemblage par crochet (8) est monté, tordue de sorte qu'elle dépasse dans l'espace (43) des surfaces de crochet (41, 42) engagées l'une derrière l'autre.

5. Système de fixation selon la revendication 4, **caractérisé en ce que** la griffe (40) est configurée en L et qu'une première branche de la griffe (40) peut être introduite dans l'évidement (44) de l'élément formant crochet (6) dépassant de la tranche et orienté vers la face supérieure du panneau et qu'une deuxième branche est orientée vers la surface de crochet de ce même élément de crochet, la deuxième branche étant, pendant le montage, automatiquement tirée dans l'espace (43) des surfaces de crochet (41, 42) engagées l'une derrière l'autre.
